Europäisches Patentamt

European Patent Office

Office européen des brevets

(11) Publication number: **0 083 858**
**B1**

(18)

(12) **EUROPEAN PATENT SPECIFICATION**

(45) Date of publication of patent specification: **21.09.88**

(51) Int. Cl.⁴: **B 23 H 1/02**

(21) Application number: **82306713.7**

(22) Date of filing: **16.12.82**

(54) **A wire-cut electric discharge machining method and control device.**

(30) Priority: **17.12.81 JP 204175/81**

(43) Date of publication of application:
**20.07.83 Bulletin 83/29**

(45) Publication of the grant of the patent:
**21.09.88 Bulletin 88/38**

(84) Designated Contracting States:
**CH DE FR GB LI**

(56) References cited:
**US-A-4 292 491**

**Patent Abstracts of Japan, vol. 4, no. 164, 14 November 1980, page 16M41**

**Patent Abstracts of Japan, vol. 2, No. 138, 16 November 1978, page 4549M78 VDI-ZEITSCHRIFT, vol. 120, no. 15/16, August 1978, VDI-VERLAG, Düsseldorf A. LAIKA "Maschinen und Anlagen für das funkenerosive Schneiden**

(73) Proprietor: **FANUC LTD**
**3580, Shibokusa Aza-Komanba Oshino-mura Minamitsuru-gun Yamanashi 401-05 (JP)**

(72) Inventor: **Mitsuo, Kinoshita**
**Nanyodai 69-18 1755-328, Horinouchi Hachioji-shi Tokyo (JP)**

(74) Representative: **Billington, Lawrence Emlyn et al**
**HASELTINE LAKE & CO. Hazlitt House 28 Southampton Buildings Chancery Lane London WC2A 1AT (GB)**

Courier Press, Leamington Spa, England.

## Description

This invention relates to an electric discharge machining method usig an electric discharge machine of the type that cuts a workpiece by means of a wire electrode, or so-called "wire-cut" electric discharge machine. The invention also relates to a control device for such an electric discharge machine.

In an embodiment of a wire-cut electric discharge machine, a voltage differential is established between a longitudinally travelling wire electrode and a workpiece to produce an electrical discharge or spark across the intervening gap. Relative movement is established between the workpiece and the wire electrode on the basis of machining command data while the electrical discharge erodes the workpiece in small increments, thereby cutting the workpiece into a desired shape. In an electric discharge machine of this type, machining conditions change or need to change depending upon the nature and thickness of the workpiece material and the diameter of the wire electrode. Such conditions may include the voltage impressed across the gap between the electrode and workpiece, the resulting peak current and average current magnitudes, the capacitance of the discharge circuit, the duty (on-off time) of the voltage pulses applied to the gap, the wire electrode tension, servo voltage, and the specific resistance of the machining field (dielectric) introduced into the gap. The operator must therefore take into consideration the thickness and properties of the workpiece as well as the electrode diameter and set the optimum machining conditions on a panel of the associated numerical control device prior to the start of cutting. The wire-cut electric discharge machining operation may then proceed on the basis of the set conditions.

Another important factor in electric discharge machining is that the thickness of a workpiece is not always uniform. When such is the case, it is necessary to change the machining conditions in accordance with the change in thickness. With the conventional wire-cut electric discharge machine, however, only one set of machining conditions can be set on the operator's panel. In order to change over from one set of conditions to another set in accordance with workpiece thickness, therefore, the operator must monitor the change in thickness and, whenever a change is noted, must set, manually, the proper values for impressed voltage, peak current, pulse duty cycle and wire electrode tension, etc. This is an extremely laborious task and makes it impossible to achieve unattended operation.

JP—A—55—112 727 discloses a wire-cut electric discharge machining method in which a sudden substantial change in workpiece thickness can be detected and the machining conditions automatically changed accordingly by a single substantial change in machining conditions.

US—A—4 292 491 discloses a wire-cut electric discharge machining method according to the preamble of claim 1 in which, as feed speed varies in accordance with workpiece thickness, electrical and machining conditions are varied in dependence upon the variation in the feed speed. When workpiece thickness decreases the electrical energy is dropped suddenly to a minimum and then increases only gradually.

According to the present invention there is provided a wire-cut electric discharge machining method for machining a workpiece in accordance with a command from a control device including a processor and a reader for reading an NC—program on a storage medium, by producing relative movement between a wire electrode and the workpiece along a commanded path and producing an electric discharge in a gap between the wire electrode and the workpiece, the commanded path chaving a portion along which the workpiece varies continuously in thickness; which method comprises storing, in advance, plural sets of different machining conditions in a memory of the control device, which sets differ in stages from one to another in dependence upon workpiece thickness; and which method is characterised by:

machining the commanded path portion in accordance with a control process wherein, at the beginning of the commanded path portion, the processor calculates the difference n between the number $N_n$ of the machining conditions set defined on the storage medium and applicable to the workpiece thickness at the end of the commanded path portion, and the number $N_o$ of the machining conditions set defined on the storage medium and applicable to the workpiece thickness at the beginning of the commanded path portion, the processor also calculates the relative travelling distance L between the wire electrode and the workpiece along the commanded path portion and then the travelling distance $L_o = L/n$ between machining condition changeover points between consecutive ones of the sets of machining conditions from set $N_o$ to set $N_n$ along the commanded path portion, the intermediate machining conditions sets being read from the machining conditions memory, the electric discharge machining taking place along the command path portion with the machining conditions changing from machining conditions set $N_o$ to machining conditions set $N_n$ by one machining conditions set at a time at intervals L/n along the total travelling distance L corresponding to the commanded path portion.

An embodiment of the present invention may provide a wire-cut electric discharge machining method whereby machining conditions can be changed during machining through a simple and inexpensive arrangement.

An embodiment of the invention may provide a wire-cut electric discharge machining method whereby machining of a workpiece can proceed while machining conditions are changed to deal with variation in workpiece thickness encountered during machining.

An embodiment of the invention will be apparent from the following description taken in conjunction with the accompanying drawings, in which:

Fig. 1 is a block diagram of an arrangement for practicing a method of the present invention, the arrangement including a control device according to the present invention;

Fig. 2 is a diagram useful in describing selection of machining conditions in accordance with a change of workpiece thickness; and

Figs. 3 and 4 are diagrams useful in describing how machining conditions are changed in accordance with the progress of machining for a case where workpiece thickness increased in a gradual manner.

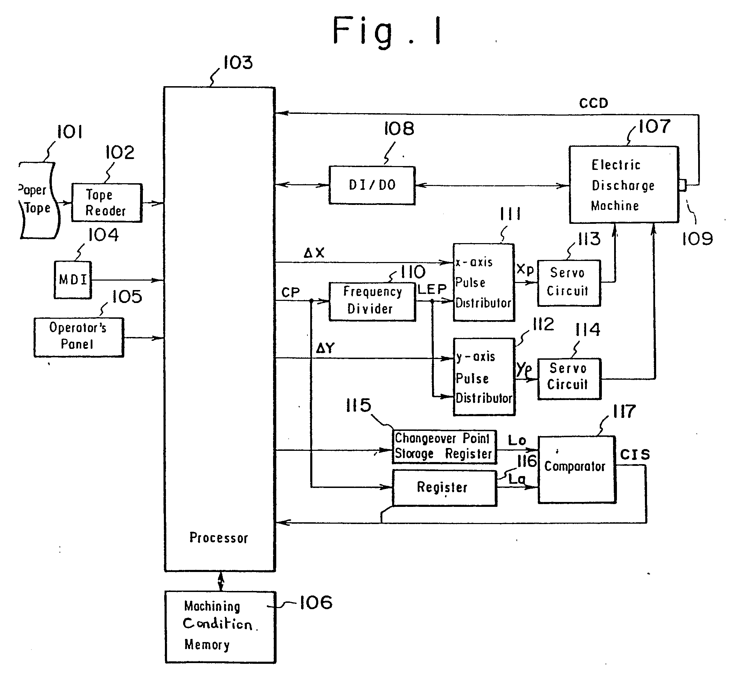

Referring to Fig. 1, an arrangement for practicing an electric discharge machining method of the present invention, including a control device according to the present invention, comprises a tape reader 102 for reading-in a machining program (numerical control, or NC, data) from a paper tape 101 bearing the data in punched form. The machining program is composed of data instructive of position and machining path, M-function instruction data and instructions inserted at proper locations for selecting electric discharge machining conditions. A machining condition selection instruction is pressed by the letter S followed by a numerical value of three digits. The leftmost digit indicated a machining condition change mode, while the two remaining digits are instructive of a predetermined machining condition from among a plurality of machining conditions stored in a machining condition memory, described hereinbelow. First, second and third machining condition change modes are available. These are indicated by numeral values 1, 2 and 3, respectively, found in the leftmost of the three digits. When a first-mode machining condition selection instruction is issued, there is an immediate change in machining condition. In the second mode, machining conditions change in a stepwise manner. When a third-mode machining condition selection instruction is issued, there is no immediate alteration in machining condition. Indeed, the machining condition changes at the instant there is a change in the state of the electric discharge cutting operation.

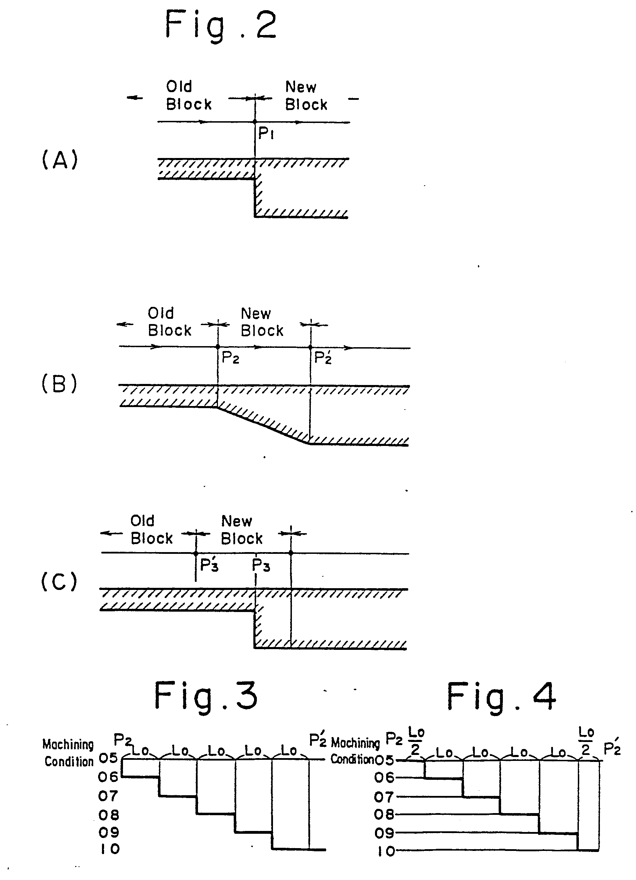

In Fig. 2, A, B and C show how a change in the thickness of a workpiece is accommodated. Only Fig. 2B represents an embodiment of the present invention as defined in claim 1. The workpiece illustrated in Fig 2A has a thickness which changes abruptly as a point P1, the coordinates whereof are known. When the wire electrode, moving relative to the workpiece, reaches the point P1, machining conditions will change immediately at said point upon issuance of the first-mode machining condition selection instruction. The workpiece shown in Fig. 2B has a gradually changing thickness beginning at point P2, whose coordinates are known. When the wire electrode reaches the point P2, machining conditions will change in stages starting from said point upon issuance of the second-mode machining condition selection instruction. The workpiece shown in Fig. 2C has a thickness which changes abruptly at point P3, whose coordinates are unknown. When the wire electrode reaches a position (P'3) short of point P3, the third-mode machining condition selection instruction is issued in a new block. Then, when the wire electrode arrives at point P3, the resulting change in machining state, caused by the change in workpiece thickness, will give rise to a change in the machining conditions.

Returning to Fig. 1, the data read in by the tape reader 102 is applied to a processor 103. When a move command is read-in, the processor performs an arithmetic operation to compute incremental values $\Delta X$, $\Delta Y$, which are applied to X-axis and Y-axis pulse distributors 111, 112 respectively, and generates a pulse train CP the frequency $f$ whereof corresponds to a commanded speed (linear velocity). The processor 103 includes an internal memory, not shown, in which the incremental values $\Delta X$, $\Delta Y$ are stored as quantities $Xr$, $Yr$ indicative of movement, along the X and Y axes, remaining in one block. The pulse distributors 111, 112 generate pulses $Xp$, $Yp$ in response to the incremental values unput thereto. As each pulse is generated, the processor 103 performs the arithmetic operations:

$$Xr-1 \dashrightarrow Xr, \quad Yr-1 \dashrightarrow Yr \qquad (1)$$

thereby monitoring the amount of movement remaining along the X and Y axes. When the conditions $Xr=0$, $Yr=0$ are established, the processor 103 generates, internally thereof, a pulse distribution end signal in response to which generation of the pulse train CP is terminated. The processor also causes the tape reader 102 to read-in the move command of the next block from the paper tape 101. The processor 103 is also adapted to execute registration processing wherein machining conditions entered by a manual data input (MDI) unit, described below, or machining conditions set on an operator's panel, are stored in an internal, non-volatile machining condition memory, as well as machining condition change processing for changing machining conditions when a machining condition selection instruction is read-in from the paper tape 101.

The manual data input (MDI) unit 104, mentioned above, is provided for entering blocks of numerical control data or electric discharge machining conditions. The operator's panel, designated at 105, is provided with switches and meters for setting such machining conditions as applied voltage, peak current, electric discharge circuit capacitance, duty cycle of pulsed voltage applied to the gap between the wire electrode and workpiece, tension applied to the wire electrode, and servo voltage. Numeral 106 denotes the abovementioned non-volatile memory for storing machining conditions entered by the MDI 104 or set by the operator's panel 105.

A wire-cut electric discharge machine 107 includes a mechanism for feeding a wire electrode longitudinally of the wire, a mechanism for establishing relative movement between the wire electrode and a workpiece, a power supply for providing the voltage impressed across the wire electrode and workpiece, a device for controlling the power supply for said voltage, and a device for supplying a machining fluid to the site at which machining takes place. A data input/output unit 108 adminsters the exchange of ditigal data between the electric discharge machine 107 and the processor 103. The electric discharge machine 107 is provided with a sensor for sensing a change in the state of machining. The sensor does this by monitoring discharge current or servo voltage, producing a signal CCD indicative of a change in state when such is detected. The signal is applied to the processor 103.

The pulse train CP of frequency $f$ produced by the processor 103 is applied to a frequency. divider 110 for dividing a signal frequency by

$$\sqrt{\Delta x^2 + \Delta y^2}.$$

The resulting pulse train signal CEP is applied to X- and Y-axis pulse distributors 111, 112 serving as digital differential analyzers. More specifically, though not shown in the drawings, each of the pulse distributors 111, 112 includes a register in which the incremental value $\Delta X$ or $\Delta Y$ is set, an accumulator, and an adder for adding the incremental value $\Delta X$ or $\Delta Y$, set in the corresponding register, to the content of the corresponding accumulator each time the frequency· divider 110 produces one of the pulses CEP. Within each pulse distributor, an overflow pulse produced by the accumulator emerges from the corresponding pulse distributor as an output pulse, or distributed pulse, Xp or Yp. The pulses Xp, Yp are applied to respective X-axis and Y-axis servo circuits 113, 114 for driving X-axis and Y-axis motors, respectively. These move the wire electrode relative to the workpiece along the commanded cutting path.

It should be noted that the distributed pulses Xp, Yp have pulse rates $F_X$, $F_Y$ given by the following:

$$F_X = \frac{f \cdot \Delta x}{\sqrt{\Delta x^2 + \Delta y^2}}$$
$$F_Y = \frac{f \cdot \Delta y}{\sqrt{\Delta x^2 + \Delta y^2}}$$
$$(2)$$

Accordingly, the relative speed F between the wire electrode and workpiece may be written:

$$F = \sqrt{F_X^2 + F_Y^2}$$
$$= f$$
$$(3)$$

This coincides with the correctly commanded speed (linear velocity).

Numeral 115 denotes a changeover point storage register. When the second-mode machining condition selection instruction is· read from the paper tape 101, the processor 103 computes the distance between machining condition changeover points, namely the travelling distance $L_0$ between these points, and stores the result in the changeover point storage register 115. The travelling distance $L_0$ between the machining condition changeover points is computed in the following manner:

(a) Machining conditions for a plurality of stages are consecutively stored beforehand in the machining condition memory 106;

(b) A difference $n$ is found, in accordance with the following equation, between a stage (number) $N_0$ for an old set of machining conditions and a stage (number) $N_n$ for a new set of machining conditions based on a machining condition selection instruction:

$$n = N_n - N_0 \qquad (4)$$

(c) By using the abovementioned X- and Y-axis incremental values $\Delta X$, $\Delta Y$, travelling distance L in the currently prevailing block is obtained from:

$$L = \sqrt{(\Delta X)^2 + (\Delta Y)^2} \qquad (5)$$

(d) The travelling distance $L_0$ between the machining condition changeover points is obtained from:

$$L_0 = L/n \qquad (6)$$

which distance, referred to hereinafter as the changeover travelling distance, is stored in the changeover point storage register 115.

Also provided is a register 116 which, in the second mode, counts the pulses CP obtained from the processor 103 for storing a travelling distance $L_a$. This travelling distance $L_a$ and the changeover travelling distance $L_0$ from the register 115 are compared by a comparator 117 which, when coincidence between them is sensed, produces a coincidence signal CIS for resetting the register 116 to zero.

In operation, plural sets (i.e. a plurality of sets) of machining conditions are entered by means of the MDI 104 or operator's panel 105 and are registered in the machining condition memory 106. The machining conditions in each set include the applied voltage, peak current, discharge circuit capacitance, pulse duty cycle, wire electrode tension and servo voltage. For defining sets of machining conditions based on workpiece thickness, we will assume that the numerical values of the two digits which specify the sets of machining conditions grow successively larger with an increase in the thickness of the workpiece. Thus, sets of machining conditions corresponding to respective ones of machining condition specifying numbers ranging from 01 to 99 are stored in the machining condition memory 106. As the two-digit number specifying machining conditions grows larger, therefore, this indicates that the conditions are changing to accommodate electric discharge machining applied to a workpiece of an increasing thickness.

After the machining condition sets are registered in the memory 106, a start button is depressed to cause NC data to be read into the processor 103 from the paper tape 101 via the tape recorder 102. If the read data indicates a first-mode machining condition selection instruction S100, then the processor 103 immediately selects, from the machining condition memory 106, the set of machining conditions indicated by the two rightmost digits of said instruction. These machining conditions are applied to the electric discharge machine 107 through the data input/output unit 108 to set the machine to the proper conditions. When the setting operation is completed, the electric discharge machine 107 sends a signal indicative of this fact to the processor 103 through the data input/output unit 108. The processor 103 responds by actuating the taper reader 102 to read in NC data from the paper tape 101. If the read data is positional data, then the processor 103 computes the incremental values $\triangle X$, $\triangle Y$, applies these to the pulse distributors 111, 112, respectively, produces the pulse train CP of frequency $f$ and applies the pulse train to the frequency divider circuit 110. The latter produces the pulse train CEP of frequency

$$f/\!\!\sqrt{\Delta x^2 + \Delta y^2}$$

and applies the pulse train to each of the adders (not shown) in the corresponding pulse distributors 111, 112. As a result, the pulse distributors 111, 112 execute arithmetic pulse distributing operations, producing the distributed pulses Xp, Yp which are applied to the servo circuits 113, 114, respectively, for driving X- and Y-axis motors. These transport the wire electrode relative to the workpiece. The distributed pulses Xp, Yp also enter the processor 103 which executes the arithmetic operations of Eq. (1) each time the pulses Xp, Yp are generated. When the amount of remaining movement reaches zero, the processor 103 generates the internal pulse distribution end signal, thereby halting the generation of the pulse train CP and reading in the next block of NC data from the paper tape 101.

Referring to Fig. 2A, assume that the wire electrode cuts a workpiece up to the point P1, of known coordinates, at which point (i.e., starting from the next block of data) an increase in workpiece thickness is encountered. In the machining program stored on the paper tape 101, a first-mode machining condition selection instruction will be found following the machining path data instructive of the path up to point P1. For example, we shall assume that the machining condition number specifying the set of machining conditions from point P1 onwards is the number 10. Thus, S110 will be the machining condition selection instruction found to be inserted following the path data up to point P1. When the signal indicative of instruction S110 enters the processor 103, the latter goes to the machining condition memory 106 and immediately reads out the set of machining conditions specified by the rightmost two digits 10. The set of conditions is then fed into the electric discharge machine 107 through the input/output unit 108. In response, the machine 107 automatically changes such conditions as the applied voltage, peak current magnitude and pulse duty cycle etc on the basis of the conditions specified by the input two-digit number 10. Electric discharge machining thenceforth is performed based on the new conditions.

In a case where workpiece thickness changes abruptly at point P3 of unknown coordinates, as shown in Fig. 3C, a third-mode machining condition selection instruction, such as S310, will be found inserted in the machining program following path data indicative of a path up to a point P3' which precedes the point P3. Path data for a new block is inserted in the machining program following said selection instruction S310. When the instruction enters the processor 103, the latter is placed in an operating mode based on the third-mode machining selection instruction but does not yet read the set of machining conditions specified by the two-digit number 10 out of memory 106, and, hence, does not deliver this set of conditions to the electric discharge machine 107 at this time. Next, when the new block of path data is read-in, the wire electrode is transported relative to the workpiece along the commanded path to cut the workpiece. When the wire electrode arrives at point P3, a change in the state of machining is encountered and results in a greater discharge current. This is sensed by the sensor 109 which responds by producing the signal CCD and applying it to the processor 103. The latter responds in turn by immediately reading, out of memory 106, the set of machining conditions specified by the two rightmost digits of the machining condition selection instruction S310. This set of machining conditions is applied to the electric discharge machine 107 through the input/output unit 108. As a result, the machine 107 automatically changes such values as the applied voltage, peak current and pulse duty cycle etc based on the input set of machining conditions. From this point onward electric discharge machining is executed based on the new conditions.

When the wire electrode cuts the workpiece shown in Fig. 2B and arrives at the point P2, whose coordinates are known, workpiece thickness gradually increases in the next block. In the machining program, a second-mode machining condition selection instruction will be found inserted following path data for a path up to P2.

Assuming that the number indicating the set of machining conditon for maximum thickness in the new block is the number 10, the machining condition selection instruction will be S210. When a signal indicative of this instruction enters the processor 103, the latter performs the arithmetic operation of Eq. (4). If we assume that 05 is the number of the old set of machining conditions, then the procesor performs the operation $n = 10 - 5 = 5$ from Eq. (4). Thenceforth the processor performs the operation of Eq. (5) based on the new block of move data to compute the travelling distance L in the new block and, using n and L, obtains the changeover travelling distance $L_o$ from Eq. (6), this then being set in the changeover point storage register 115. The processor 103 is further operable to read, first of all, the set of machining conditions having the machining condition number 06 succeeding the old set of machining conditions. This new set of machining conditions is read out of the machining condition memory 106 and is applied to the electric discharge machine 107. Accordingly, the electric discharge machine automatically changes the values of the applied voltage, peak current, pulse duty cycle, etc., to the values specified by the set of machining conditions 06. The machine subsequently cuts the workpiece on the basis of various sets of machining conditions, one set giving way to another each time a new changeover point is reached in the course of machining.

More specifically, as the wire electrode is moved relative to the workpiece along the commanded path of the new block in the second mode, the pulses CP, generated by the processor 103, enter the register 116 and increment its content La. When La becomes equivalent to the changeover travelling distance Lo in register 115, the comparator 117 applies the coincidence signal CIS to the processor 103, which signal resets the content of register 116 to zero at the same time. In response to the signal CIS, the processor 103 reads out the set of machining conditions having the machining condition number 07 and applies this set of conditions to the electric discharge machine 107 so that the workpiece will be cut based thereon until the next machining condition changeover point is reached. Thenceforth, and in like fashion, sets of machining conditions 08, 09, 10 are read out of the memory 106 and applied to the electric discharge machine 107 in the stated order each time the wire electrode moves a distance $L_o$ relative to the workpiece. The machining conditions thus change in stages in accordance with the progress of the cutting operation. This is shown in Fig. 3, wherein the machining condition number changes from 05 to 10 in stages in accordance with the progress of machining, in the case of second-mode machining condition selection.

In the example of Fig 3 described above, the set of machining conditions is changed to that specified by the number 06 at the beginning of the new block. As shown in Fig. 4, however, an arrangement is possible wherein the change to the set of machining conditions specified by number 06 is effected at a position $L_o/2$ beyond the beginning of the new block, after which the machining conditions are changed from one set to another, in the order 07, 08, 09, 10, with each

increment of movement $L_o$.

In accordance with the present invention as it is employed in the embodiment described and illustrated hereinbefore, electric discharge machining can be carried out in optimum fashion because the machining conditions are capable of being changed during the course of machining. In addition, there need be no substantial increase in cost because the plural sets of machining conditions are simply stored in memory and selected in response to a machining condition selection instruction read in from a storage medium such as a paper tape.

As many apparently widely different embodiments of the present invention can be made without departing from the spirit and scope thereof, it is to be understood that the invention is not limited to the specific embodiments thereof except as defined in the appended claim.

## Claim

A wire-cut electric discharge machining method for machining a workpiece in accordance with a command from a control device including a processor (103) and a reader (102) for reading an NC-program on a storage medium (101), by producing relative movement between a wire electrode and the workpiece along a commanded path and producing an electric discharge in a gap between the wire electrode and the workpiece, the commanded path having a portion $(P_2—P'_2)$ along which the workpiece varies continuously in thickness; which method comprises storing, in advance, plural sets (01—99) of different machining conditions in a machining conditions memory (106) of the control device, which sets differ in stages from one to another in dependence upon workpiece thickness; and which method is characterised by: machining the commanded path portion $(P_2—P'_2)$ in accordance with a control process wherein, at the beginning of the commanded path portion $(P_2—P'_2)$, the processor (103) calculates the difference (n) between the number $(N_n)$ of the machining conditions set defined on the storage medium (101) and applicable to the workpiece thickness at the end of the commanded path portion $(P_2—P'_2)$, and the number $(N_o)$ of the machining conditions set defined on the storage medium (101) and applicable to the workpiece thickness at the beginning of the commanded path portion $(P_2—P'_2)$, the processor also calculates the relative travelling distance L between the wire electrode and the workpiece along the commanded path portion $(P_2—P'_2)$ and then the travelling distance $L_o = L/n$ between machining condition changeover points between consecutive ones of the sets of machining conditions from set $N_o$ to set $N_n$ along the commanded path portion $(P—P'_2)$, the intermediate machining conditions sets being read from the machining conditions memory (106), the electric discharge machining taking place along the commanded path portion $(P_2—P'_2)$ with the machining conditions changing from machining

conditions set $N_o$ to machining conditions set $N_n$ by one machining conditions set at a time at intervals L/n along the total travelling distance L corresponding to the commanded path portion $(P_2\text{---}P'_2)$.

**Patentanspruch**

Elektrofunkenerosives Drahtschneidverfahren zum Bearbeiten eines Werkstücks in Übereinstimmung mit einem Befehl aus einer Steuereinrichtung, die einen Prozessor (103) un ein Lesegerät (102) zum Lesen eines auf einem Speichemedium (101) gespeicherten NC-Programms enthält, durch Erzeugen einer relativen Bewegung zwischen einer Drahtelektrode um dem Werkstück längs einer befohlenen Bahn und Erzeugen einer elektrischen Entladung in einem Spalt zwischen der Drahtelectrode und dem Werkstück, wobei die befohlene Bahn einen Abschnitt $(P_2\text{---}P'_2)$ hat, längs dessen sich das Werkstück kontinuierlich in der Dicke ändert, welches Verfahren ein vorausgehendes Speichern einer Vielzahl von Sätzen (01---99) verschiedener Bearbeitungsbedingungen in einem Bearbeitungsbedingungen-Speicher (106) der Steuereinrichtung enthält, welche Sätze sich voneinander in Stufen in Abhängigkeit von der Werkstückdicke unterscheiden, und welches Verfahren gekennzeichnet ist durch Bearbeiten des befohlenen Bahnabschnitts $(P_2\text{---}P'_2)$ in Übereinstimmung mit einem Steuerablauf, wobei der Prozessor (103) am Beginn des befohlenen Bahnabschnitts $(P_2\text{---}P'_2)$ die Differenz (n) zwischen der Nummer $(N_n)$ des Bearbeitungsbedingungen-Satzes, der auf dem Speichermedium (101) definiert ist und auf die Werkstückdicke am Ende des befohlenen Bahnabschnitts $(P_2\text{---}P'_2)$ anwendbar ist, und der Nummer $(N_o)$ des Bearbeitungsbedingungen-Satzes, der auf dem Speichermedium (101) definiert ist und auf die Werkstückdicke am Anfang des befohlenen Bahnabschnitts $(P_2\text{---}P'_2)$ anwendbar ist, berechnet, wobei der Prozessor ebenfalls die relative Weglänge L zwischen der Drahtelektrode und dem Werkstück längs des befohlenen Bahnabschnitts $(P_2\text{---}P'_2)$ und dann die Weglänge $L_o = L/n$ zwischen Bearbeitungsbedingungs-Umschaltpunkten zwischen aufeinanderfolgenden der Sätze von Bearbeitungsbedingungen vom dem Satz $N_o$ bis zu dem Salz $N_n$ längs des befohlenen Bahnabschnitts $(P_2\text{---}P'_2)$ berechnet, wobei die zwischenliegenden Bearbeitungsbedingungen-Sätze aus dem Bearbeitungsbedingungen-Speicher (106) ausgelesen werden und wobei das elektrische Entladungsbearbeiten längs des befohlenen Bahnabschnitts $(P_2\text{---}P'_2)$ mit den Bearbeitungsbedingungen ausgeführt, wird, die sich von dem Bearbeitungsbedingungen-Satz $N_o$ zu dem Bearbeitungsbedingungen-Satz $N_n$ hin jeweils um einen Bearbeitungsbedingungen-Satz bei Intervallen L/n längs der gesamten Weglänge L ändern, die mit dem befohlenen Bahnabschnitt $(P_2\text{---}P'_2)$ korrespondiert.

**Revendication**

Un procédé d'usinage par décharges électriques pour usiner une pièce à usiner en fonction d'une commande provenant d'un dispositif de commande comprenant un processeur (103) et un lecteur (102) pour lire un programme de commande numérique (NC) sur un support de données (101), en produisant un mouvement relatif entre une électrode en fil et la pièce à usiner le long d'un trajet commandé et en produisant une décharge électrique dans un intervalle entre l'électrode en fil et la pièce à usiner, le trajet commandé ayant une partie $(P_2\text{---}P'_2)$ le long de laquelle l'épaisseur de la pièce à usiner varie de façon continue; lequel procédé comprend le fait de mémoriser, à l'avance, plusieurs jeux (01 à 99) de conditions d'usinage différentes dans une mémoire de conditions d'usinage (106) du dispositif de commande, jeux qui diffèrent en degré de l'un à l'autre en fonction de l'épaisseur de la pièce à usiner; et lequel procédé est caractérisé par: le fait d'usiner la partie de trajet commandé $(P_2\text{---}P'_2)$ en fonction d'un processus de commande dans lequel, au début de la partie de trajet commandé $(P_2\text{---}P'_2)$, le processeur (103) calcule la différence (n) entre le numéro $(N_n)$ du jeu de conditions d'usinage défini sur le support de données (101) et applicable à l'épaisseur de la pièce à usiner à la fin de la partie de trajet commandé $(P_2\text{---}P'_2)$, et le numéro $(N_o)$ du jeu de conditions d'usinage défini sur le support de données (101) et applicable à la pièce à usiner au début de la partie de trajet commandé $(P_2\text{---}P'_2)$, le processeur calcule aussi la distance de déplacement relative L entre l'électrode en fil et la pièce à usiner le long de la partie de trajet commandé $(P_2\text{---}P'_2)$, puis la distance de déplacement $L_o = L/n$ entre les points de changement de conditions d'usinage entre les jeux consécutifs de conditions d'usinage, du jeu $N_o$ au jeu $N_n$, le long de la partie de trajet commandé $(P_2\text{---}P'_2)$, les jeux de conditions d'usinage intermédiaires étant lus dans la mémoire de conditions d'usinage (106), l'usinage par décharges électriques ayant lieu le long de la partie de trajet commandé $(P_2\text{---}P'_2)$ de façon que les conditions d'usinage changent de jeu de conditions d'usinage $N_o$ au jeu de conditions d'usinage $N_n$, d'un jeu de conditions d'usinage à la fois, à intervalles L/n le long de la distance de déplacement totale L correspondant à la partie de trajet commandé $(P_2\text{---}P'_2)$.

# Fig. 1

Paper Tape 101 → Tape Reader 102 → Processor 103

MDI 104

Operator's Panel 105

Machining Condition Memory 106

DI/DO 108

Electric Discharge Machine 107

CCD

109

ΔX → x-axis Pulse Distributor 111 → Xp → Servo Circuit 113

CP → Frequency Divider 110 → LEP

ΔY → y-axis Pulse Distributor 112 → Yp → Servo Circuit 114

Changeover Point Storage Register 115 → Lo → Comparator 117 → CIS

Register 116 → La

0 083 858

# Fig.2

(A)

Old Block | New Block

P₁

(B)

Old Block | New Block

P₂        P₂'

(C)

Old Block | New Block

P₃'   P₃

# Fig.3

Machining Condition

P₂  Lo  Lo  Lo  Lo  Lo  P₂'

05
06
07
08
09
10

# Fig.4

Machining Condition

P₂ $\frac{Lo}{2}$ Lo  Lo  Lo  Lo  $\frac{Lo}{2}$ P₂'

05
06
07
08
09
10

2